# FASCICULE DE BREVET EUROPEEN

(11) **EP 2 071 320 B1**
(45) Date de publication et mention de la délivrance du brevet: **10.04.2019**
(21) Numéro de dépôt: 08170446.2
(22) Date de dépôt: 02.12.2008
(51) Int. Cl.: G01N 27/02, G01N 21/3577, G01N 21/90

(54) **Dispositif d'analyse de la composition du contenu d'un récipient**
Vorrichtung zur Analyse der Zusammensetzung des Inhalts eines Gefäßes
Device for analysing the composition of the contents of a container

(30) Priorité: 05.12.2007 FR 0759595
(43) Date de publication de la demande: 17.06.2009
(73) Titulaire: Manneschi, Alessandro, 52100 Arezzo (IT)
(72) Inventeur: Manneschi, Alessandro, I-52100, AREZZO (IT)
(74) Mandataire: Regimbeau

(56) Documents cités:
- EP-A- 1 712 900
- DE-A1- 10 318 893
- GB-A- 2 297 377
- JP-A- 2000 193 599
- JP-A- 2006 266 948
- US-A1- 2004 000 653
- US-A1- 2007 228 280

## Description

La présente invention concerne le domaine de l'analyse de la composition du contenu de récipients tels que des bouteilles.

La présente invention peut trouver de nombreuses applications. Elle peut s'appliquer notamment au contrôle de fabrication dans des usines d'embouteillage pour éviter toute malversation sur le contenu de récipients fournis ultérieurement au grand public. L'invention peut également s'appliquer au contrôle de bagages transportés par des passagers en particulier des bagages à main conservés par des passagers dans les aéroports.

### ETAT DE LA TECHNIQUE

Les moyens d'examen par rayons X, bien connus, ne permettent pas de déterminer le contenu de bouteilles ou récipients équivalents. De tels moyens d'examen permettent en effet seulement le classement en deux catégories, matériaux organiques et non organiques. Ils ne permettent pas de distinguer entre eux deux matériaux organiques.

Pour palier cet inconvénient, un dispositif d'analyse de la composition du contenu d'un récipient a été développé.

Ce dispositif comprend des moyens émetteurs/récepteurs d'un champ électromagnétique à au moins plusieurs fréquences comprises dans une plage de fréquences déterminée, des moyens support d'un récipient dont le contenu doit être analysé, adaptés pour assurer un positionnement précis relatif entre les moyens émetteurs/récepteurs et le récipient, des moyens aptes à mesurer l'impédance complexe des moyens émetteurs/récepteurs influencés par la charge constituée par le récipient et son contenu, représentative des caractéristiques diélectriques complexes du récipient et de son contenu, et des moyens aptes à fournir une information liée à l'impédance complexe mesurée et en conséquence à la nature du contenu dudit récipient.

Un avantage de ce dispositif est qu'il permet la détection du contenu d'un récipient avec une grande fiabilité.

Pour améliorer la fiabilité du dispositif décrit ci-dessus, on a déjà proposé d'introduire dans celui-ci des moyens pour l'obtention d'au moins une donnée physique additionnelle relative à une caractéristique du récipient, l'information relative à la nature du contenu du récipient étant fonction de la donnée physique additionnelle, et de l'impédance complexe mesurée.

Avantageusement, la donnée physique additionnelle peut comprendre la masse du récipient et de son contenu.

Des développements récents ont montré cependant que certains liquides, autorisés sur le marché, non combustibles, non inflammables et non explosifs, lorsque mélangés entre eux dans des proportions appropriés, peuvent permettre la production de substances instables aptes à exploser au moyen de détonateurs adéquats.

Dans d'autres cas, le mélange de deux liquides autorisés sur le marché, non combustibles, non inflammables peut engendrer des réactions chimiques produisant une forte chaleur et/ou l'émission de vapeur toxiques.

Certains des liquides pouvant être utilisés pour la fabrication de telles substances liquides dangereuses (explosive, produisant des vapeurs toxiques, etc.) ont un comportement polaire. Leur signature est donc identique à de l'eau du point de vue électromagnétique.

Actuellement, certaines différences existent entre la constante diélectrique complexe de tel liquide et l'eau, mais cette différence ne peut être détecté que :
- pour un récipient dont on connaît avec précision la géométrie ainsi que le matériau le constituant, et
- pour une quantité de liquide connue avec précision.

On connaît également des dispositifs d'analyse spectrale émettant un rayonnement dans le domaine de l'infra rouge et permettant la détection de substance inflammable ou explosive dans un récipient, comme par exemple une bouteille. Le document GB 2 297 377 décrit un tel dispositif d'analyse spectrale. Ce dispositif comprend une chambre comprenant une ouverture par laquelle l'utilisateur dispose verticalement le récipient à analyser dans la chambre. Le dispositif comprend également un couvercle pour coiffer l'ouverture de la chambre lors de l'analyse spectrale. Ce couvercle permet de limiter les effets de la lumière ambiante afin d'améliorer la précision de la mesure.

Toutefois, ces dispositifs présentent de nombreux inconvénients. Notamment, ce type de dispositif ne permet pas d'obtenir un résultat d'analyse fiable lorsque le récipient contenant le liquide à analyser est par exemple une bouteille en verre coloré ou en plastique opaque. Par ailleurs, ce type de dispositif n'est pas adapté à des analyses rapides et répétées de différents récipients, l'utilisateur devant effectuer de nombreuses manipulations lors de chaque analyse (ouverture du couvercle, retrait du récipient analyse, introduction du nouveau récipient, fermeture du couvercle, etc.).

Un but de l'invention est de proposer un dispositif permettant d'améliorer la fiabilité et la praticité des dispositifs précités, et de faciliter la détection de tels liquides permettant la production de substances dangereuses lorsqu'ils sont mélangés entre eux.

### RESUME DE L'INVENTION

On propose à cet effet, selon l'invention, un dispositif d'analyse de la composition du contenu d'un récipient comprenant :
- des moyens émetteurs/récepteurs d'un champ électromagnétique à au moins plusieurs fréquences comprises dans une plage de fréquences déterminée,
- des moyens support d'un récipient dont le contenu doit être analysé, adaptés pour assurer un positionnement précis relatif entre les moyens émetteurs/récepteurs et le récipient,
- des moyens aptes à mesurer l'impédance complexe des moyens émetteurs/récepteurs influencée par la charge constituée par le récipient et son contenu, représentative des caractéristiques diélectriques complexes du récipient et de son contenu,
caractérisé en ce qu'il comprend en outre des moyens d'analyse spectrale du contenu du récipient pour mesurer l'absorption d'ondes par le récipient et son contenu, et des moyens aptes à fournir une information relative à la nature du contenu dudit récipient en fonction de l'impédance complexe mesurée et de la mesure, les moyens d'analyse spectral sont aptes à émettre des ondes dont les longueurs d'onde sont comprises entre 1100 nm et 3 µm.

Selon une autre caractéristique avantageuse, le dispositif comprend en outre :
- des moyens pour l'obtention d'au moins une donnée physique additionnelle relative à une caractéristique du récipient, et
- des moyens aptes à fournir une information relative à la nature du contenu dudit récipient en fonction de l'impédance complexe mesurée et de la donnée physique additionnelle.

Avantageusement, le dispositif selon l'invention peut comprendre les caractéristiques suivantes :
- les moyens d'analyse spectral sont aptes à émettre des ondes dont les longueurs d'onde sont comprises entre 1100 et 1300 nm ;
- les moyens d'analyse spectral comprennent au moins un émetteur apte à émettre des ondes et un récepteur disposé de sorte à recevoir les ondes émises par l'émetteur ;
- l'émetteur et le récepteur sont disposés dans le plan médian des moyens support au droit l'un de l'autre, de sorte que les ondes émises par l'émetteur traversent le récipient à analyser avant d'être reçu par le récepteur ;
- l'émetteur est disposé sur les moyens support et le récepteur est disposé sous les moyens support ;
- les moyens d'analyse spectrale comprennent une pluralité d'émetteurs disposés le long des moyens support et une pluralité de récepteurs associés disposés de sorte à recevoir les ondes émises par la pluralité d'émetteur ;
- les émetteurs sont disposés dans le plan médian des moyens de support, lesdits émetteurs étant alternativement disposés sur et sous les moyens de support, et étant associés à des récepteurs disposés au droit desdits émetteurs.

Avantageusement, le dispositif peut comprendre en outre les caractéristiques suivantes :
- des moyens pour l'obtention d'au moins une donnée physique additionnelle relative à une caractéristique du récipient, l'information relative à la nature du contenu du récipient étant fonction de la donnée physique additionnelle,
- la donnée physique additionnelle comprend la masse du récipient (R) et de son contenu.
- les moyens pour l'obtention d'au moins une donnée physique additionnelle comprennent un capteur gravimétrique pour la mesure de la masse du récipient et de son contenu,
- le capteur gravimétrique est disposé sous les moyens support du récipient,
- la tare du dispositif est mesurée périodiquement par le capteur gravimétrique lorsque aucun récipient n'est introduit dans le support,
- la présence d'un récipient sur les moyens support est détectée par les moyens aptes à mesurer l'impédance complexe des moyens émetteurs/récepteurs,
- les moyens aptes à fournir une information comprennent des moyens aptes à corriger l'amplitude de l'impédance complexe mesurée en fonction de la masse mesurée, à comparer l'impédance complexe corrigée avec des valeurs de référence prédéterminées pour la même plage de fréquences, et à générer une alarme lorsque l'impédance complexe mesurée s'écarte des valeurs de référence
- la donnée physique additionnelle comprend la capacité du récipient et/ou le matériau constituant les parois du récipient et/ou l'épaisseur des parois du récipient,
- la donnée physique additionnelle comprend le matériau constituant les parois du récipient, le matériau pouvant être choisi parmi le verre ou le plastique.
- les moyens pour l'obtention d'au moins une donnée physique additionnelle comprennent des moyens de saisie pour la saisie de la donnée physique additionnelle,
- l'information relative à la nature du contenu du récipient est également fonction de la donnée physique additionnelle saisie par un utilisateur sur les moyens de saisie,
- les moyens aptes à fournir une information comprennent des moyens aptes à comparer l'impédance complexe mesurée avec des valeurs de référence prédéterminées pour la même plage de fréquences, lesdits moyens commandant à l'utilisateur la saisie de la donnée physique additionnelle sur les moyens de saisie, lorsque l'impédance complexe mesurée s'écarte des valeurs de référence,
- la saisie de la donnée physique additionnelle grâce aux moyens de saisie en sélectionnant des caractéristiques de récipients parmi une liste prédéterminée de caractéristiques de récipients.

### PRESENTATION DES FIGURES

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en perspective d'un dispositif d'analyse conforme à un premier mode de réalisation de la présente invention ;
- les figures 2 à 4 représentent des vues schématique en coupe du dispositif de la figure 1 ;
- la figure 5 représente une vue schématique sous forme de blocs fonctionnels d'éléments composant le dispositif de la figure 1,
- la figure 6 représente une vue schématique latérale d'une portion d'un dispositif d'analyse conforme à un deuxième mode de réalisation,

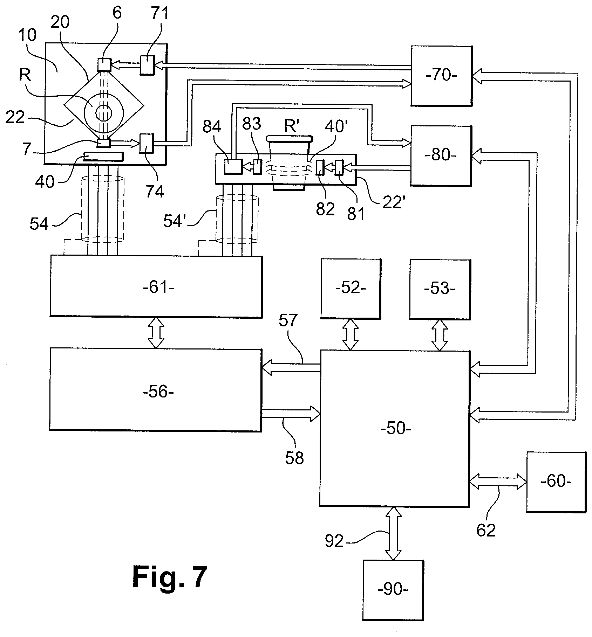

- la figure 7 représente une vue schématique sous forme de blocs fonctionnels d'éléments composant le dispositif conforme au deuxième mode de réalisation,
- la figure 8 représente schématiquement l'évolution du coefficient d'absorption du verre en fonction de la longueur d'onde d'un rayonnement appliqué, et
- les figures 9a et 9b représentent schématiquement les coefficients d'absorption d'une part d'un liquide à base d'eau et d'autre part d'un liquide fortement oxygéné, tel que du peroxyde d'hydrogène (H2O2), pour une plage de longueurs d'onde de rayonnement.

### DESCRIPTION DE L'INVENTION

La présente invention repose essentiellement sur l'approche suivante.

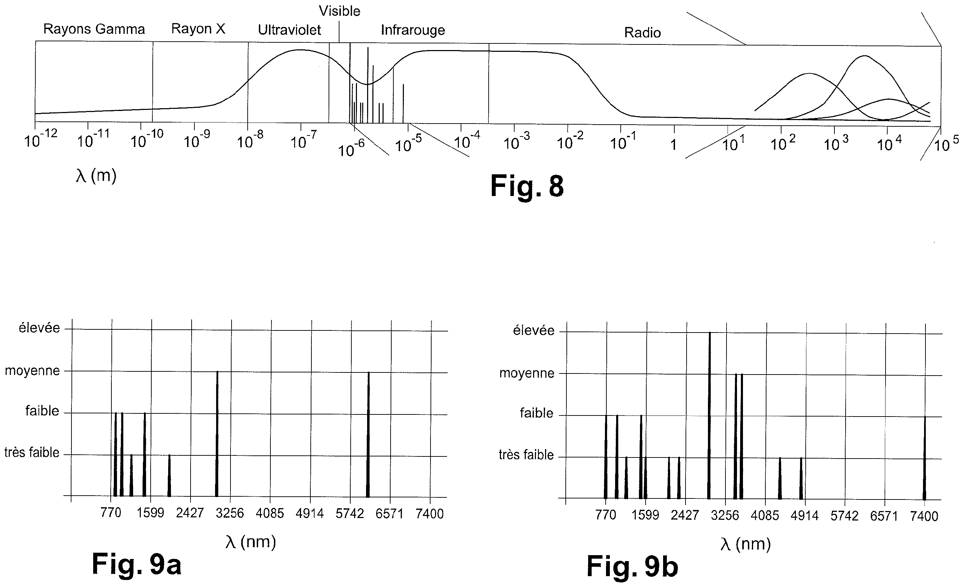

Après de nombreuses études et test, le Déposant a constaté que de manière a priori surprenante certains matériaux susceptibles de former des emballages, et en particulier le verre, présentent une fenêtre de longueurs d'onde pour laquelle leur coefficient d'absorption d'un rayonnement chute notablement. On a en particulier représenté sur la figure 8 annexée l'évolution du coefficient d'absorption pour le verre. On constate à l'examen de la figure 8 que le coefficient du verre chute sensiblement pour la plage de rayonnement appliqué compris entre 0.7µm et 3µm. Cette plage particulière de longueurs d'onde pour laquelle le rayonnement peut ainsi traverser le matériau constituant l'emballage, peut être mise à profit pour l'analyse du contenu.

Comme on l'expliquera par la suite, l'invention permet en effet de distinguer des liquides à base d'eau, et en particulier l'eau, d'un liquide fortement oxygéné, en particulier le peroxyde d'hydrogène, dans la mesure où comme illustré sur les figures 9a et 9b ces liquides présentent des coefficients d'absorption différents sur une plage de longueurs d'onde donnée.

La présente invention repose par ailleurs sur l'approche suivante.

Les matériaux diélectriques présentent quatre polarisations de base : électronique, ionique, de dipôle et migrationnelle.

Chaque type de polarisation est caractérisé par un temps de mise en place, appelé temps de montée. Si le champ électromagnétique d'excitation a une pulsation supérieure à l'inverse du temps de montée, la polarisation ne peut pas se réaliser. Par conséquent, la polarisation est présente uniquement aux fréquences inférieures à celles de coupure et est absente aux fréquences supérieures. Dans la zone de transition, on assiste à un phénomène de perte d'énergie dans le diélectrique dû à la rotation des molécules déphasées vis à vis du champ d'excitation.

Les temps de montée pour la polarisation électronique sont de 10⁻¹⁴ à 10⁻¹⁵ secondes, c'est-à-dire dans le domaine optique. Une telle gamme de fréquences est difficilement exploitable à l'échelle industrielle car les bouteilles à examiner peuvent être fréquemment partiellement ou complètement opaques.

La polarisation ionique a des temps de montée compris entre 10⁻¹³ et 10⁻¹⁴ secondes, très proche des temps de relaxation électronique. Elle est donc également difficilement exploitable.

La polarisation de dipôle est caractéristique des diélectriques polaires (comme par exemple l'eau).

La polarisation de dipôle, au contraire des polarisations électroniques et ioniques, qui sont sans inertie, persiste pour un certain temps après l'extinction d'une excitation. La polarisation de dipôle diminue avec une loi exponentielle et une constante de temps, appelée temps de relaxation, comprise entre 10⁻⁶ et 10⁻¹¹ secondes, c'est-à-dire dans le domaine des fréquences radio. Les ondes électromagnétiques ayant ces fréquences peuvent traverser le verre, la matière plastique et d'autres matériaux diélectriques. La Demanderesse a ainsi déterminé que les ondes électromagnétiques peuvent être utilisées pour l'examen du contenu de bouteilles ou récipients équivalents.

La polarisation migrationnelle est présente dans certains diélectriques, en particulier dans les matériaux hétérogènes, qui contiennent des impuretés. Dans ce cas, les charges se déplacent très lentement et le temps de montée peut être de plusieurs secondes, minutes, voire parfois heures. Ce type de polarisation par conséquent n'est mesurable qu'à très basse fréquence.

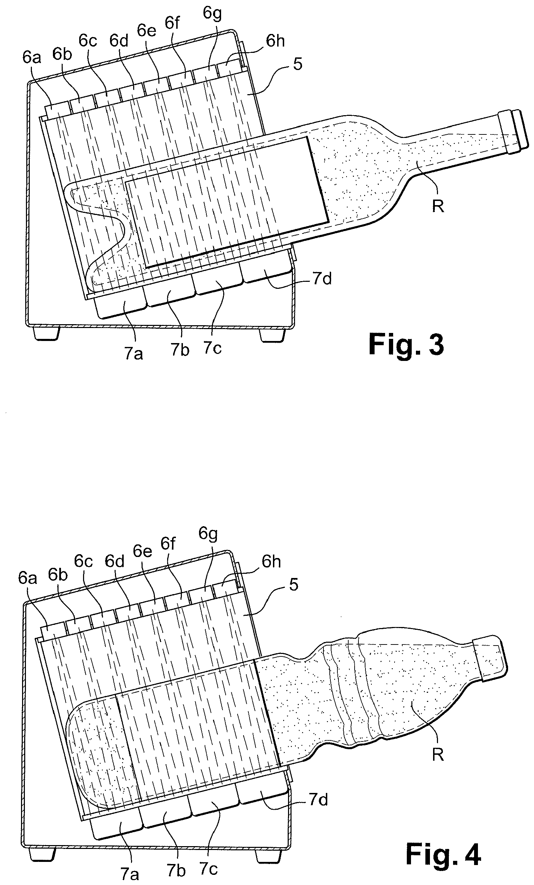

L'eau qui est un liquide polaire, et par conséquent les liquides à base d'eau, présentent un temps de relaxation de l'ordre de 10⁻¹¹ secondes à température ambiante, correspondant à une fréquence d'environ 16 GHz. La mesure de la constante diélectrique complexe à fréquence plus basse que celle de relaxation montre une partie réelle élevée et des pertes limitées (eau distillée) comme l'illustre la figure 3 annexée.

Les hydrocarbures saturés CnH(2n+2) sont des molécules non polaires ou avec un moment de dipôle électrique très bas, par conséquent, ils ne présentent pas un phénomène de polarisation de dipôle et la valeur de la partie réelle de la constante diélectrique est basse (constante diélectrique relative de l'ordre de 2). Les pertes dans les hydrocarbures sont négligeables jusqu'à des fréquences très élevées. Si une molécule d'hydrocarbure perd sa symétrie comme, par exemple, dans le cas de l'alcool éthylique ou méthylique, on assiste à la parution d'un moment de dipôle électrique et, par conséquent, à une constante supérieure à celle obtenue dans le cas des hydrocarbures, et à un phénomène de résonance à la fréquence de relaxation dipolaire.

Les phénomènes physiques décrits ci-dessus sont connus depuis la fin des années 30 (voire par exemple Peter Debye Nobel Lecture, 1936).

Cependant, ils n'ont pas jusqu'ici été mis en oeuvre pour l'analyse efficace du contenu de récipients.

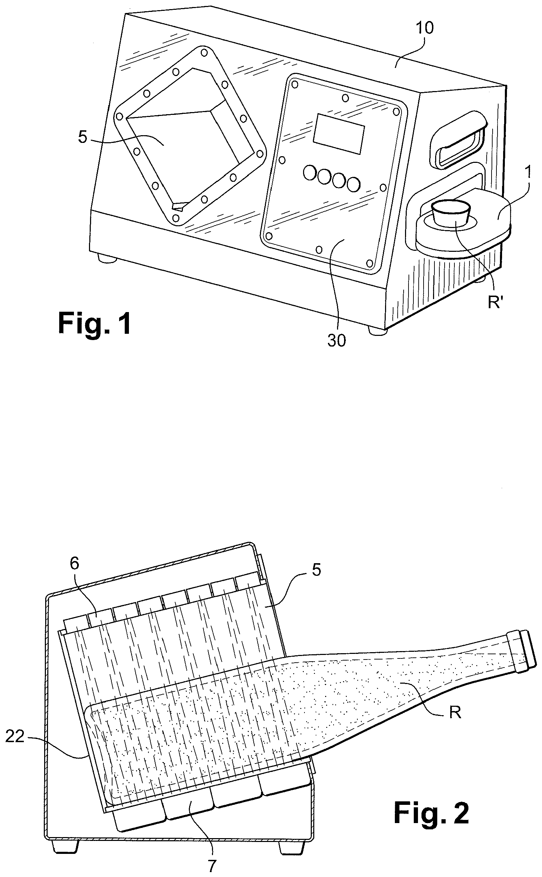

On a représenté sur la figure 1, le boîtier d'un dispositif d'analyse conforme à la présente invention.

La géométrie générale de ce boîtier peut faire l'objet de nombreuses variantes de réalisation et ne sera donc pas décrite dans le détail par la suite.

De préférence, ce boîtier comprend un carter 10 métallique pour former un blindage autour du capteur électromagnétique conforme à la présente invention vis à vis de l'environnement extérieur.

De préférence, ce carter définie une cavité 5 dont la partie inférieure 22 présente une concavité dirigée vers le haut, conçue pour recevoir un récipient à analyser et garantir un positionnement précis de ce dernier par rapport aux moyens émetteurs/récepteurs de champ électromagnétique conformes à l'invention.

Plus précisément encore, de préférence, dans le cadre de la présente invention, la cavité 5 précitée est formée d'un canal de section droite constante dont les génératrices sont inclinées vers le bas en éloignement de la face avant ouverte 12 par laquelle un récipient est introduit.

La face arrière de cette cavité ou canal 5 est de préférence fermée pour éviter que le récipient analysé ne glisse sur le fond 22.

La section droite du canal 5 peut faire l'objet de nombreuses variantes. On a représenté sur la figure 1, une première variante selon laquelle le canal 5 possède une section droite carrée.

Bien entendu la cavité 5 peut présenter d'autres formes. Par exemple, dans un mode de réalisation, le canal 5 présente une section droite circulaire. Dans une autre variante de réalisation le canal 5 possède une section droite en forme de trou de serrure comprenant une partie centrale cylindrique prolongée par deux excroissances diamétralement opposées de contour globalement rectangulaire. Dans un autre mode de réalisation encore, le canal 5 comprend une section droite de forme rectangulaire, dont les diagonales sont respectivement verticale et horizontale de sorte qu'une arête coïncide avec le point le plus bas du canal 5. Les avantages des différentes variantes de sections droites seront explicités dans la suite.

Le boîtier 10 comporte en outre de préférence un pupitre de contrôle 30 équipé d'un clavier de saisie et/ou de programmation, d'un afficheur et de moyens de signalisation (lumineux et/ou sonore) de présence réseau et d'alarme. A cet égard, l'invention n'est bien entendu pas limitée aux modes de réalisation particuliers représentés sur les figures annexées.

De préférence, la cavité 5 est enrobée par un revêtement de protection plastique.

Pour permettre la détection de liquides qui une fois mélangés entre eux peuvent produire une substance dangereuse (explosive, produisant des vapeurs toxiques, etc.), le dispositif selon l'invention comprend des moyens d'analyse spectrale 6, 7.

Ces moyens d'analyse spectrale 6, 7 sont illustrés notamment à la figure 2. Les moyens d'analyse spectrale 6, 7 permettent de mesurer l'absorption d'onde du récipient R et de son contenu.

Les moyens d'analyse spectrale 6, 7 sont aptes à mesurer l'absorption de ces ondes par le récipient et son contenu.

Cette analyse spectrale est effectuée à travers les parois du récipient R.

Les radiations infrarouges sont émises par les moyens d'analyse spectrale 6, 7 à des longueurs d'onde comprises entre 1100 nm et 3µm.

En effet, les radiations infrarouges de longueurs d'ondes comprises entre 0.7µm et 3µm ont l'avantage de traverser notamment des récipients en verre, même lorsque ceux-ci sont opaques ou colorés. Par ailleurs, avec des ondes infrarouges, l'absorption d'onde des parois du récipient R est négligeable par rapport à l'absorption d'onde par le liquide contenu dans le récipient R.

Ainsi, une telle analyse spectrale est faiblement influencée par les parois du récipient R, et la mesure de l'absorption d'onde correspond sensiblement à l'absorption d'onde du liquide contenu dans le récipient R.

Comme rappelé ci-dessus, l'invention permet de distinguer des liquides à base d'eau, et en particulier l'eau, d'un liquide fortement oxygéné, en particulier le peroxyde d'hydrogène, dans la mesure où comme illustré sur les figures 9a et 9b ces liquides présentent des coefficients d'absorption différents sur une plage de longueurs d'onde donnée.

Dans un mode de réalisation préférentiel, les moyens d'analyse sont aptes à émettre des ondes dont la longueur d'onde est comprise entre 1100 nm et 1300 nm. En effet, on a découvert que dans la plage de longueur d'onde comprise entre 1100 et 1300 nm, la couleur des verres qui composent les bouteilles de vin ou d'autres alcools ont un pourcentage minimal d'absorption d'onde en comparaison de l'eau.

En effet, la molécule d'eau a un pic d'absorption à 1200 nm. Le fait de travailler sur un pic d'absorption de l'eau pourrait sembler être désavantageux puisque l'atténuation de rayonnement est très forte. Cependant, le fait que l'absorption d'eau soit prédominante dans cette bande de longueur d'onde (i.e. 1100nm-1300nm) par rapport à l'absorption du récipient permet une mesure indépendante du matériau composant le récipient, en particulier lorsque ce récipient est en verre sombre ou en plastique opaque.

Ainsi, en travaillant au pic d'absorption de l'eau, la mesure n'est plus dépendante de la sélectivité du récipient mais est surtout sensible au liquide lui-même.

En d'autres termes, la bande de longueur d'onde comprise entre 1100nm et 1300nm offre une bonne indépendance vis-à-vis du matériau constituant le récipient contenant le liquide à analyser.

Les moyens d'analyse spectrale 6, 7 peuvent comprendre un ou plusieurs émetteurs 6 pour l'émission d'ondes infrarouges, et un ou plusieurs récepteurs 7 pour la réception des ondes émises ayant traversées le récipient R et son contenu.

Chaque émetteur 6 peut être associé à un ou plusieurs récepteurs 7. De même, chaque récepteur 7 peut être associé à un ou plusieurs émetteurs 6.

Dans le mode de réalisation illustré à la figure 2, les moyens d'analyse spectrale 6, 7 comprennent huit émetteurs 6 et quatre récepteurs 7, chaque récepteur 7 étant associés à deux émetteurs 6.

Les émetteurs 6 et récepteurs 7 sont disposés dans le plan médian du canal 5 au droit les uns des autres, de sorte que les ondes émises par les émetteurs 6 traversent le récipient R et son contenu avant d'être reçues par les récepteurs 7.

Plus précisément, les émetteurs 6 sont disposés sur le canal 5 et les récepteurs 7 sont disposés sous le canal 5. Le fait de disposer les émetteurs 6 sur le canal 5 permet d'éviter les risques d'aveuglement de l'utilisateur, le faisceau infrarouge étant émis du haut vers le bas.

Toutefois, d'autres configurations sont envisageables.

Le fait que le dispositif d'analyse selon l'invention comprenne une cavité inclinée destinée à recevoir le récipient dont le contenu doit être analysé permet un positionnement précis et répétable du récipient par rapport aux émetteurs 6 et récepteurs 7 du dispositif.

Par ailleurs, le fait de disposer les récepteurs 7 sous la cavité 5 permet de limiter les effets de la lumière ambiante afin d'améliorer la précision de la mesure. En effet, lorsque le récipient dont le contenu doit être analysé est disposé dans la cavité 5, les récepteurs 7 sont couverts par le récipient de sorte que le corps du récipient empêche les rayonnements ambiants d'être reçus par le récepteur, rayonnements ambiants qui peuvent perturber l'analyse.

Dans un autre mode de réalisation encore, les émetteurs 6 sont disposés dans le plan médian du canal 5, lesdits émetteurs 6 étant alternativement disposés sur et sous le canal 5, et étant associés à des récepteurs 7 disposés au droit desdits émetteurs 6.

Le principe de fonctionnement du dispositif selon l'invention est le suivant. Comme illustré à la figure 3, lors d'une analyse, les émetteurs 6 émettent des ondes infrarouges. Ces ondes infrarouges traversent les parois du récipient R et le liquide contenu dans le récipient R, le liquide absorbant les différentes ondes émises par les émetteurs 6 en fonction de sa nature. Les ondes n'ayant pas été absorbées (ou ayant été partiellement absorbés) sont ensuite reçues par les récepteurs 7.

La mesure de l'absorption relative pour deux, trois ou plusieurs longueurs d'ondes correctement sélectionnées, permet de définir si le liquide contenu dans le récipient R, même s'il appartient à la classe des liquides homopolaires tels que l'eau, est en réalité potentiellement dangereux.

En parallèle ou en séquence, la mesure de l'impédance complexe du récipient et de son contenu (et dont le principe sera rappelé dans la suite) permet de déterminer si le liquide contenu dans le récipient est un liquide inflammable ou explosif.

Comme illustré à la figure 3, les émetteurs 6 et récepteurs 7 peuvent être disposés le long du canal 5, les récepteurs 7 étant disposés de sorte à recevoir les ondes émises par les émetteurs 6.

Ceci permet d'obtenir une mesure de l'absorption du récipient R et de son contenu même lorsque le récipient R comprend une base creuse, ou que le récipient R comprend une étiquette bloquant le passage des ondes infrarouge à travers ses parois sur une portion de sa surface contenue dans le canal 5.

Par exemple, lorsque le récipient R comprend une base creuse seules les ondes infrarouges émise par certains des émetteurs disposés entre l'ouverture du canal 5 et le fond du canal 5 vont traverser le récipient R et son contenu. L'analyse spectrale sera donc dans ce cas basée uniquement sur les ondes ayant traversées le récipient et son contenu.

Dans le cas illustré à la figure 4, seul les ondes émises par les émetteurs 6c à 6h - qui sont les émetteurs les plus proches de l'ouverture du canal 5 parmi les huit émetteurs 6a à 6h - et reçues par les récepteurs 7b à 7d seront prises en compte pour l'analyse spectrale.

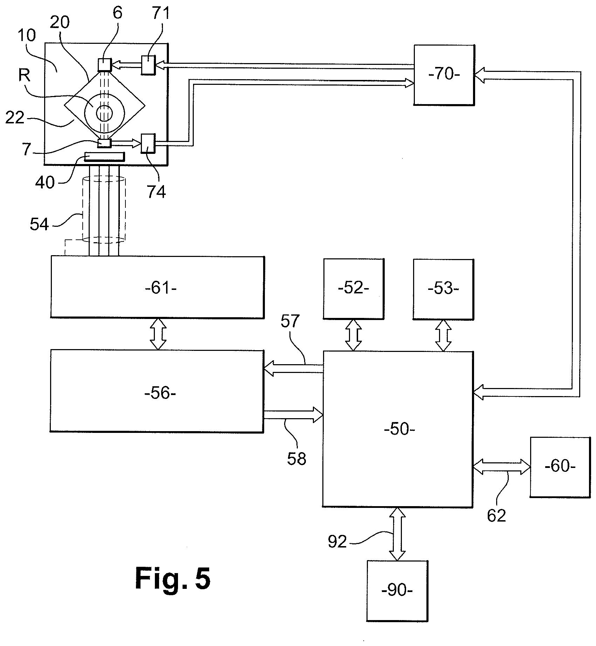

Dans le cas illustré à la figure 5, seul les ondes émises par les émetteurs 6a et 6b - qui sont les émetteurs les plus proches du fond 22 du canal 5 - et reçues par le récepteur 7a seront prises en compte pour l'analyse spectrale, les ondes infrarouges émises par les émetteurs 6c à 6h - les plus éloignées du fond du canal 5 - étant bloquées par une étiquette située sur une portion du récipient R, sur toute sa circonférence.

Avantageusement, le dispositif d'analyse peut comprendre des moyens de commandes permettant de trouver automatiquement, par balayage électronique (balayage), la (ou les) position(s) où l'atténuation de la lumière est minimal entre émetteur et récepteur, donc le (ou les) couple(s) émetteur/récepteur permettant d'obtenir la mesure la plus précise.

Avec le dispositif d'analyse selon l'invention, il n'est donc pas nécessaire que l'utilisateur positionne manuellement les émetteurs et les récepteurs pour éviter les étiquettes. Ainsi, le dispositif d'analyse selon l'invention permet une analyse rapide, précise et facilement répétables de liquides contenus dans des récipients.

L'utilisation de moyens d'analyse spectrale 6, 7, notamment infrarouge, permet d'obtenir des données très utiles pour la caractérisation de la nature du liquide contenu dans un récipient R, et permet ainsi d'automatiser l'analyse du contenu du récipient R sans nécessiter d'intervention de l'utilisateur.

Si le matériau du récipient R est totalement opaque aux infrarouges, il est toutefois possible de recourir aux moyens décrit ci-après, avec ou sans intervention de l'utilisateur pour saisir des données additionnelles concernant la nature d'un récipient et/ou de son contenu.

Avantageusement, le dispositif décrit précédemment peut être utilisé en combinaison avec le dispositif décrit dans le document EP 1 712 900 permettant la mesure de l'impédance complexe du récipient et de son contenu et qui est décrit ci-après.

Comme on l'a illustré sur la figure 5 sur laquelle on a schématisé sous la référence R un récipient à analyser et sur laquelle on retrouve le fond 22 de la cavité 5, de préférence un capteur ou des capteurs électromagnétiques destiné(s) à mesurer les caractéristiques diélectriques complexes de la bouteille R et de son contenu sont placés autour de la cavité 5.

Ces moyens émetteurs/récepteurs de champ électromagnétique, sont formés de préférence d'un ou plusieurs transducteurs (antennes) 40 relié(s), par l'intermédiaire d'un réseau de connexion 54, d'un réseau électromagnétique de mesure 56 et de bus 57, 58, à un générateur, conçus pour émettre une onde électromagnétique. Typiquement le générateur est adapté pour couvrir la plage de fréquences allant de quelques Hz, par exemple 5Hz à quelques GHz, par exemple 5 ou 50 GHz. Le générateur est mis en oeuvre, soit manuellement par un opérateur lorsque celui-ci introduit un récipient R dans le canal 5, soit automatiquement sous l'effet d'un capteur 52 conçu pour détecter la présence d'un récipient R dans le canal 5.

Des moyens 50 sont conçus pour mesurer l'impédance complexe des moyens émetteurs 40 influencée par la charge constituée par le récipient R et son contenu, représentative des caractéristiques diélectriques complexes de ce récipient R et de son contenu. Plus précisément, les moyens 50 sont conçus pour mesurer cette impédance complexe à plusieurs fréquences échantillonnées sur la plage d'excitation précitée de quelques Hz à plusieurs GHz. Typiquement, les moyens 50 opèrent ainsi sur un nombre de fréquences compris entre 10 et 50, avantageusement sur une trentaine de fréquences.

Le dispositif comprend également :
- des émetteurs de rayonnements infrarouges 6 disposés dans le plan médian du canal 5, au dessus de celui-ci et
- des récepteurs de rayonnements infrarouges 7 disposés dans le plan médian du canal 5, au dessous de celui-ci.

Un système d'analyse spectrale 70 est adapté pour mesurer l'absorption des rayonnements infrarouges par le récipient R et son contenu. Le système d'analyse spectrale 70 est connecté aux émetteurs 6 par l'intermédiaire d'un module de pilotage 71 des émetteurs 6 de radiation et aux récepteurs 7 par l'intermédiaire d'un module de pilotage 74 des récepteurs de radiation 7.

Les moyens 50 sont adaptés pour fournir une information liée à la nature du contenu du récipient détecté en fonction de l'impédance complexe mesurée et de la mesure de l'absorption..

De préférence, ces moyens 50 sont adaptés pour comparer l'impédance complexe mesurée et la mesure de l'absorption avec des valeurs de référence prédéterminées stockées dans une mémoire 60 et à générer une alarme lorsque l'impédance complexe mesurée et/ou la mesure d'absorption s'écarte des valeurs de référence.

On a représenté sur la figure 5, une mémoire 60 couplée aux moyens d'analyse 50 par un bus de communication 62, et dans laquelle peuvent être mémorisées les valeurs de référence prédéterminées sur la plage de fréquence de travail pour l'impédance complexe et sur une plage de longueurs d'ondes de travail pour la mesure d'absorption. On a par ailleurs représenté sur la même figure 5 sous la référence 90, des moyens d'alarme, présents de préférence sur le pupitre de contrôle 30, reliés aux moyens 50 par un bus de communication 92 et adaptés pour générer une alarme sonore et/ou visuelle, lorsque l'impédance complexe mesurée s'écarte des valeurs de référence.

En variante, les valeurs de référence peuvent être calculées par les moyens 50 et non pas contenues dans une mémoire 60.

Par ailleurs, selon une autre variante, les moyens 90 peuvent être adaptés pour indiquer directement la nature du contenu du récipient R ou au moins la famille de ce contenu à la place de ou en complément des moyens d'alarme précités.

Les moyens 40 émetteurs/récepteurs de champ électromagnétique peuvent faire l'objet de nombreux modes de réalisation.

Les moyens 40 peuvent être formés d'un simple bobinage formant émetteur et récepteur, relié par un réseau à deux fils aux moyens 56.

Les moyens 40 peuvent également être formés de deux bobinages formant respectivement, et le cas échéant alternativement, émetteur et récepteur, reliés par un réseau à quatre fils aux moyens 56.

Les moyens 40 peuvent également être formés de deux armatures d'une capacité entourant la cavité 5 destinée à recevoir le récipient R et reliés par un réseau à deux fils aux moyens 56.

Les moyens 40 peuvent comprendre (deux) six capacités croisées composées de quatre armatures reliées par un réseau à quatre fils aux moyens 56 et formant respectivement, et le cas échéant alternativement, émetteur et récepteur.

Les moyens 40 peuvent être formés de lignes de transmission. Typiquement, ces lignes de transmission opèrent dans le domaine des micro-ondes. Elles peuvent être formées de lignes bifilaires ou de guides d'ondes à fentes.

Par ailleurs, dans le cadre de la présente invention, on peut utiliser des capteurs mettant en oeuvre simultanément un transducteur inductif et un transducteur capacitif. Cette disposition permet de déceler que la croissance de la partie réelle de la constante diélectrique complexe est due à une armature métallique interne au récipient et non à un ou des liquides ayant des propriétés particulières. Cette disposition permet ainsi de déceler la présence d'écrans métalliques susceptibles de former blindage perturbant la mesure. Le capteur inductif alimenté par une source de courant alternatif produira, dans ce cas, des courants de Foucault dans la partie métallique. Ces courants seront mesurés par le dispositif de traitement. Et la comparaison des signaux provenant du transducteur de champ électrique et du transducteur de champ magnétique 42 permet une détection satisfaisante.

Bien entendu, le nombre de moyens composant les émetteurs et/ou récepteurs n'est aucunement limité.

L'homme de l'art comprendra à la lecture de la description détaillée qui précède, que la présente invention propose ainsi un capteur électromagnétique à balayage de fréquences élevées qui permet de mesurer les caractéristiques diélectriques de la bouteille R et de son contenu.

Comme décrit précédemment, la section droite du canal 5 peut faire l'objet de nombreuses variantes. Par exemple, la section droite peut être en forme de trou de serrure, la section droite peut également être de forme circulaire, ou de forme carrée voire rectangulaire (à diagonales verticales et horizontales).

Pour certaines géométries de la section droite du canal, l'impédance complexe mesurée peut varier en fonction du volume du récipient dans lequel un même liquide analysé est contenu.

Ainsi, dans le cas d'un canal 5 dont la section droite est de forme circulaire, l'impédance complexe mesurée Zmesuré pour un récipient R de 50 centilitres contenant de l'eau (figure 12a) sera différente de l'impédance complexe mesurée Zmesuré pour un récipient R de 2 litres contenant de l'eau (figure 12b).

Ceci est dû au fait que l'impédance complexe mesurée Zmesuré correspond à l'impédance complexe équivalente Zéquivalent de l'ensemble des dipôles situés entre les armatures des moyens émetteurs/récepteurs de champ électromagnétique.

Ainsi, l'impédance complexe mesurée Zmesuré est égale à la somme de l'impédance complexe de l'eau Z2 contenue dans le récipient R et des impédances complexes Z1 et Z3 de l'air situé entre les parois du récipient R et les armatures.

Les impédances complexes Z1 et Z3 de l'air situé entre les parois du récipient R et les armatures sont considérées comme des impédances parasites qu'il convient de minimiser afin que l'impédance complexe mesurée soit sensiblement égale à l'impédance complexe du liquide contenu dans le récipient à analyser.

Les géométries carrée/rectangulaire (dont les diagonales sont respectivement verticale et horizontale de sorte qu'une arête coïncide avec le point le plus bas du canal 5) et en trou de serrure de la section droite présente l'avantage de rendre la mesure de l'impédance complexe indépendante du volume du récipient dans lequel le liquide à analyser est contenu.

En effet, ces géométries permettent de limiter la distance entre les parois du récipient R et les armatures des moyens émetteurs/récepteurs de champ électromagnétique quelque soit le volume du récipient R.

Dans le cas d'un récipient R de forme cylindrique placé dans un canal 5 de section carrée, le récipient R aura tendance à venir en contact avec les cloisons du canal 5 du fait de la gravité.

Ainsi, la distance entre les parois du récipient et les armatures (qui sont très proche des cloisons du canal 5) est quasi nulle quelque soit le diamètre du récipient contenant le liquide à analyser, de sorte que les impédances parasites Z1 et Z3 de l'air situé entre les parois du récipient R et les armatures sont négligeables. L'impédance mesurée Zmesuré est sensiblement égale à l'impédance complexe du liquide contenu dans le récipient R quelque soit le volume du récipient R utilisé.

Tout comme pour un canal dont la section droite est carrée, une géométrie de section droite en forme de clé de serrure permet de minimiser la distance entre les parois du récipient contenant le liquide à analyser et les armatures du dispositif quelque soit le volume du récipient R utilisé, de sorte que la mesure de l'impédance complexe est indépendante du volume du récipient dans lequel le liquide à analyser est contenu. Ainsi, dans le cas d'un récipient cylindrique de 50 cl, celui-ci est positionné entre les excroissances inférieures de la section droite en forme de clé de serrure (la distance entre ces excroissances peut être prévue légèrement supérieure au diamètre d'une bouteille cylindrique de 50 centilitres de type standard). Dans le cas d'un récipient de 2 litres, celui-ci est positionné au niveau de la partie centrale cylindrique du canal en forme de clé de serrure.

Ainsi, le canal 5 du dispositif définit préférentiellement une concavité 22 dirigée vers le haut. Encore plus préférentiellement, la convergence des cloisons 86, 87 du canal 5 est déterminée de sorte que non seulement la distance entre le point le plus bas du canal 5 et le centre de gravité du récipient R augmente en fonction du volume du récipient R mais de plus le point de contact du récipient R sur les parois du canal 5 s'élève et la hauteur de la base du récipient par rapport au point le plus bas du canal 5, augmente également en fonction du volume du récipient R. Plus préférentiellement encore, la concavité dirigée vers le haut est obtenue grâce à deux tronçons rectilignes de manière à minimiser l'effet des impédances parasites Z1 et Z3 de l'air situé entre les parois du récipient R et les cloisons du canal 5.

Le dispositif décrit précédemment permet de disposer de moyens d'investigation non destructifs pour déterminer la composition du contenu d'un récipient.

Pour améliorer la fiabilité du dispositif d'analyse, on peut intégrer à ce dispositif des moyens 53 permettant l'obtention d'une donnée physique additionnelle relative à une caractéristique du récipient analysé.

Dans une variante de l'invention, les moyens permettant l'obtention d'une donnée physique additionnelle comprennent des moyens de mesure de la masse du récipient R analysé.

En effet, lorsque la capacité du récipient analysé est faible (i.e. inférieure à 200 mL), le dispositif décrit précédemment a tendance à sous-estimer l'impédance complexe du liquide contenu dans le récipient analysé, ce qui peut conduire à l'émission d'une fausse alarme.

Plus précisément, l'impédance complexe pour unité de volume d'un liquide mesuré dans un récipient de capacité par exemple 100 mL sera inférieure à l'impédance complexe pour unité de volume du même liquide mesuré dans un récipient de 2L.

Il en va de même lorsqu'un récipient de forme carré est placé dans un canal de section droite carrée. Plus précisément, l'impédance complexe mesurée d'un liquide contenu dans un récipient de section carrée de 1 L sera supérieure à l'impédance complexe mesurée du même liquide contenu dans un récipient de cylindrique.

Ceci tient au fait que dans les deux cas, les parois du récipient (de section carré, ou de petite capacité) coopèrent différemment avec les parois du canal.

On propose donc, pour augmenter la fiabilité du dispositif décrit précédemment, de procurer aux moyens d'analyse 50 une donnée additionnelle en plus de l'impédance complexe mesurée et de la mesure de l'absorption d'ondes.

Cette donnée additionnelle est la masse du récipient, et préférentiellement du récipient avec son contenu.

Pour mesurer la masse du récipient et du liquide qu'il contient, le dispositif comprend un capteur gravimétrique 53.

Préférentiellement, le capteur gravimétrique 53 est disposé intégré au canal 5.

Plus précisément, le capteur gravimétrique 53 est disposé sous la partie inférieure (ou fond 22) du canal 5. Ceci permet de limiter l'encombrement du dispositif.

Le dispositif fonctionne alors comme suit.

La tare du dispositif est mesurée périodiquement. Plus précisément, lorsque aucun récipient n'est introduit dans le canal 5, le capteur gravimétrique 53 mesure la masse de la partie inférieure 22 du canal 5. Cette tare mesurée est envoyée aux moyens 50.

La présence d'un récipient dans le canal 5 est détectée :
- soit par le capteur 52,
- soit par les moyens 50.

Dans le cas où la présence d'un récipient est détectée par les moyens 50, cette détection s'effectue comme suit. L'utilisateur introduit un récipient sur la partie inférieure 22 du canal 5. L'impédance complexe des moyens émetteur/récepteur est influencée par la charge constituée par le récipient R et son contenu. Les moyens d'analyse 50 détectent cette modification d'impédance complexe, et émette un signal indiquant la présence d'un récipient à analyser pour interrompre la mise à jour périodique de la tare du dispositif.

Le capteur gravimétrique 53 mesures la masse du récipient R et de son contenu et envoi un signal représentatif de la masse mesurée aux moyens d'analyse 50.

Les moyens d'analyse 50 associent la masse mesurée à l'impédance complexe mesurée pour le récipient R analysé.

Plus précisément, la masse mesurée est utilisée pour corriger l'amplitude de l'impédance complexe mesurée.

L'impédance complexe ainsi corrigée est ensuite comparée à des valeurs de référence.

Dans une autre variante de l'invention, les moyens permettant l'obtention d'une donnée physique additionnelle comprennent des moyens de saisie 55 illustrés aux figures 2 et 14.

Les moyens de saisie 55 peuvent permettre la saisie de données additionnelles relatives au récipient analysé.

Grâce à ces données additionnelles, la sélectivité du dispositif peut être augmentée.

En effet, la connaissance de données additionnelles permet de réduire la fenêtre d'acceptation sur l'impédance complexe mesurée. Sans données additionnelles la fenêtre d'acceptation doit être suffisamment large pour prendre en compte la variabilité de facteurs physiques relatifs aux différents types de récipient susceptible d'être analysés tel que :
- le matériau constituant les parois du récipient,
- l'épaisseur des parois du récipient,
- la capacité (ou volume) du récipient.

Le dispositif peut donc comprendre des moyens de saisie 55 pour la saisie de données additionnelles relatives au récipient analysé.

Afin de faciliter l'utilisation du dispositif, les moyens d'analyse 50 proposent des questions affichées sur des moyens d'affichage 59, ainsi qu'une liste de réponses possibles.

Grâce aux moyens de saisie 55, l'utilisateur sélectionne, en fonction du récipient analysé, la réponse la plus appropriée parmi la liste de réponses proposées.

Les données additionnelles que l'utilisateur doit saisir peuvent être la capacité (i.e. volume) du récipient et/ou le matériau constituant les parois du récipient et/ou l'épaisseur des parois du récipient.

Avantageusement, les moyens d'analyse 50 affichent des questions relatives au récipient analysé uniquement lorsque la saisie de données additionnelles relative au récipient analysé est nécessaire pour déterminer la nature du liquide contenu dans le récipient analysé.

Dans ce cas, les moyens 50 fournissent une information relative à la nature du contenu du récipient en fonction de l'impédance complexe mesurée et de la (ou des) donnée(s) saisie(s) par l'utilisateur sur les moyens de saisie 55.

Par exemple, lorsque l'impédance complexe mesurée s'écarte des valeurs de référence, les moyens d'analyse 50 commandent à l'utilisateur (par l'intermédiaire des moyens d'affichage 59) la saisie, sur les moyens de saisie 55 des données additionnelles.

Dans une autre variante encore, les moyens permettant l'obtention d'une donnée physique additionnelle comprennent des moyens de mesure de la masse d'une part, et des moyens de saisie d'autre part.

Les mesures de l'impédance complexe et de l'absorption d'ondes (avec ou sans données additionnelles) peuvent être effectuées séquentiellement - grâce à un bloc de commutation 61- ou en parallèle. Dans le cas où les mesures de l'impédance complexe et de l'absorption d'onde sont effectuées séquentiellement, la mesure de l'impédance complexe peut être réalisée avant ou après la mesure de l'absorption d'ondes infrarouges.

Un exemple de séquence d'analyse peut être le suivant :
i) insertion manuelle du récipient et de son contenu dans le canal 5 en prenant arde à l'insérer jusqu'au fond 22 du canal 5, la bouteille étant disposée de sorte que l'étiquette (dans le cas d'une étiquette ne faisant pas toute la circonférence du récipient) ne se trouve pas dans la zone de rayonnement située entre les émetteurs 6 et les récepteurs 7,
ii) exécution de la mesure de l'impédance complexe par les moyens 50 grâce au réseau électromagnétique de mesure 56 et au bloc de commutation 61, et enregistrement de la mesure dans la mémoire 60,
iii) dans le cas où la mesure d'impédance complexe révèle la présence de liquide inflammable ou explosif dans le récipient, les moyens d'alarme 90 génèrent un alarme sonore et/ou visuelle, sinon, l'analyse spectrométrique est réalisée grâce au système d'analyse spectrale 70 et aux différents éléments 71, 6, 7, 74 des moyens d'analyse spectrale,
iv) dans le cas où le résultat de l'analyse spectrale confirme la présence d'un liquide potentiellement dangereux lorsque mélangé à d'autres liquides dangereuses pour produire une substance explosive, toxique, etc., les moyens d'alarme 90 génèrent un alarme sonore et/ou visuelle.

Dans le cas où le récipient R est totalement opaque au rayonnement infrarouge et/ou aux ondes électromagnétiques pour la mesure de l'impédance complexe, on peut prévoir une dispositif d'analyse secondaire 1 en plus du dispositif d'analyse principale décrit précédemment.

Le dispositif d'analyse secondaire permettant à la fois :
- la mesure de l'impédance complexe, et
- la mesure de l'absorption d'onde.

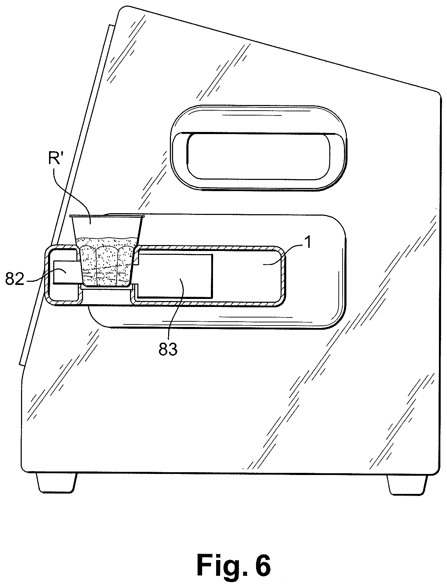

On a illustré à la figure 6, un tel dispositif d'analyse secondaire.

Le dispositif d'analyse secondaire comprend :
- des moyens secondaire émetteurs/récepteurs 40' d'un champ électromagnétique,
- un récipient secondaire R' destiné à recevoir un contenu à analyser,
- des moyens support secondaires 22' du récipient secondaire R',
- des moyens d'analyse spectrale secondaire.

L'utilisation d'un récipient secondaire R' identique pour chaque analyse permet d'assurer un positionnement constant entre les moyens secondaire émetteur/récepteur et le récipient secondaire R'. Le fait d'assurer un positionnement constant du récipient secondaire R' permet de supprimer une des variables de l'analyse, à savoir la variabilité du positionnement du récipient contenant le liquide à analyser par rapport aux moyens émetteur/récepteur.

De préférence, le récipient secondaire R' est destiné à recevoir un volume constant de liquide. Les dimensions du récipient secondaire R' sont par exemple prévues pour recevoir un volume constant de liquide compris entre 2 et 10 centilitres.

Par ailleurs, l'épaisseur des parois du récipient secondaire R' peut être constante.

Le fait d'utiliser des récipients identiques pour toutes les analyses permet d'augmenter la fiabilité du dispositif en réduisant la fenêtre d'acceptation sur l'impédance complexe mesurée.

Sans constance sur le récipient utilisé pour l'analyse, la fenêtre d'acceptation doit être suffisamment large pour prendre en compte la variabilité de facteurs physiques relatifs aux différents types de récipient susceptibles d'être analysés.

Ces facteurs physiques sont par exemple :
- le matériau constituant les parois du récipient,
- l'épaisseur des parois du récipient,
- la capacité (ou volume) du récipient.

Les moyens support secondaire 22' sont spécialement adaptés au support du récipient secondaire R'.

Préférentiellement, les dimensions des moyens support secondaire 22' sont prévues de sorte à coopérer intimement avec les parois du récipient secondaire R'.

Par ailleurs, les moyens support secondaire 22' sont prévus de sorte que, en utilisation, les moyens support secondaire 22' entourent les parois du récipient secondaire R'.

Les moyens d'analyse spectrale et de mesure de l'impédance complexe des dispositifs principaux et secondaire fonctionnent sur le même principe.

Les moyens d'analyse spectrale secondaire comprennent des émetteurs secondaires 82 connectés à un système d'analyse spectrale secondaire 80 par un module secondaire de pilotage des émetteurs 81, et des récepteurs secondaires 83 reliés au système d'analyse spectrale secondaire 80 par l'intermédiaire d'un module d'amplification 84 pour le prétraitement des données analogiques issues des récepteurs secondaires 83.

Avantageusement, certains éléments des moyens d'analyse spectrale et de mesure de l'impédance complexe peuvent être communs au dispositif principal et au dispositif secondaire.

Les moyens secondaire émetteur récepteur 40' sont formés de préférence d'un ou plusieurs tores bobinés formant antenne, reliés par l'intermédiaire d'un réseau de connexion 54' d'un réseau électromagnétique de mesure 56 et de bus 57, 58, à un générateur 50, conçu pour émettre une onde électromagnétique.

Bien entendu la présente invention n'est pas limitée aux modes de réalisation particuliers qui viennent d'être décrits mais s'étend à toute variante conforme à son esprit.

On notera par ailleurs que, dans le cadre de la présente invention, les capteurs 40 sont de préférence adaptés pour couvrir au moins une partie substantielle des récipients, voire la totalité de ceux-ci. Ceci garantit un haut niveau de sécurité dans l'analyse, puisque ceci permet d'analyser l'intégralité du contenu des récipients et non pas seulement une partie de ceux-ci.

Lorsqu'il est prévu un seul transducteur, celui-ci est simultanément ou successivement émetteur et récepteur.

Lorsqu'il est prévu plusieurs transducteurs, toutes les combinaisons sont possibles, c'est-à-dire que ces transducteurs peuvent être simultanément ou successivement émetteur et/ou récepteur.

Selon une autre caractéristique avantageuse, le dispositif d'analyse comprend en outre un ensemble détecteur de rayonnement ionisant ou radioactif. Cet ensemble est destiné à détecter la présence éventuelle de traces de produits radioactifs dans le récipient analysé.

L'ensemble détecteur de rayonnement ionisant ou radioactif peut faire l'objet de nombreux modes de réalisation. Il peut être formé de toutes structures connues de l'homme de l'art, en particulier toute structure apte à convertir un rayon ionisant détecté, en un signal électrique exploitable. Il peut s'agir par exemple et non limitativement d'un détecteur de type Geiger comprenant un tube ou chambre qui loge un gaz dont la composition est choisie pour générer une décharge ionisante lors de la détection d'un rayonnement actif, et de là une impulsion électrique. Il peut également s'agir d'un détecteur à scintillateur apte à convertir l'énergie détectée en scintillations lumineuses converties ensuite en signal électrique par un réseau de photomultiplicateurs. De nombreux scintillateurs ont été proposés à cet effet, par exemple à base de iodure de sodium, de iodure de césium ou encore de germanate de bismuth.

L'ensemble détecteur de rayonnement ionisant est placé en tout lieu approprié et de préférence à proximité immédiate des parois de la cavité 5, sur l'extérieur de celle-ci. On a représenté sur la figure 8, sous la référence 100, 110, une localisation a priori optimale de cet ensemble, sous la cavité 5, contre les deux parois composant le dièdre inférieur de la cavité 5.

L'ensemble détecteur de rayonnement ionisant 100, 110 est adapté pour travailler en temps masqué, en parallèle du dispositif de mesure d'impédance complexe précédemment décrit. L'ensemble détecteur de rayonnement ionisant 100, 110 est piloté et mis en service par tous moyens appropriés détectant la présence d'un récipient dans la cavité. De préférence, mais non limitativement, l'ensemble détecteur de rayonnement ionisant est ainsi initié par un signal prélevé sur la chaîne de mesure d'impédance complexe et représentatif de la présence d'un tel récipient dans le canal 5.

On a décrit précédemment plusieurs modes de réalisation de moyens 40 formant émetteurs/récepteurs de champ électromagnétique. Dans le cadre de la présente invention, il est de préférence prévu des moyens permettant de modifier la configuration des moyens formant émetteurs et des moyens formant récepteurs, afin d'enrichir les informations disponibles, par exemple sur le volume du récipient analysé.

## Revendications

1. Dispositif d'analyse de la composition du contenu d'un récipient comprenant :
- des moyens (40) émetteurs/récepteurs d'un champ électromagnétique à au moins plusieurs fréquences comprises dans une plage de fréquences déterminée,
- des moyens support (5) d'un récipient (R) dont le contenu doit être analysé, adaptés pour assurer un positionnement précis relatif entre les moyens émetteurs/récepteurs (40) et le récipient (R),
- des moyens (50) aptes à mesurer l'impédance complexe des moyens émetteurs/récepteurs influencée par la charge constituée par le récipient (R) et son contenu, représentative des caractéristiques diélectriques complexes du récipient et de son contenu,
**caractérisé en ce qu'**il comprend en outre des moyens d'analyse spectrale du contenu du récipient pour mesurer l'absorption d'ondes par le récipient et son contenu, et des moyens (50) aptes à fournir une information relative à la nature du contenu dudit récipient (R) en fonction de l'impédance complexe mesurée et de la mesure d'absorption, les moyens d'analyse spectral sont aptes à émettre des ondes dont les longueurs d'onde sont comprises entre 1100nm et 3µm.

2. Dispositif selon la revendication 1, **caractérisé en ce que** les moyens support comprennent une cavité (5) formée d'un canal dont les génératrices sont inclinées vers le bas en éloignement d'une face avant ouverte (12) par laquelle un récipient est introduit.

3. Dispositif selon la revendication 1, **caractérisé en ce que** les moyens d'analyse spectral sont aptes à émettre des ondes dont les longueurs d'onde sont comprises entre 1100 nm et 1300 nm.

4. Dispositif selon l'une des revendications 1 à 3, **caractérisé en ce que** les moyens d'analyse spectral comprennent au moins un émetteur (6) apte à émettre des ondes et un récepteur (7) disposé de sorte à recevoir les ondes émises par l'émetteur (6).

5. Dispositif selon la revendication 4, **caractérisé en ce que** l'émetteur (6) et le récepteur (7) sont disposés dans le plan médian des moyens support (5) au droit l'un de l'autre, de sorte que les ondes émises par l'émetteur (6) traversent le récipient (R) à analyser avant d'être reçu par le récepteur (7).

6. Dispositif selon la revendication 5, **caractérisé en ce que** l'émetteur (6) est disposé sur les moyens support (5) et le récepteur (7) est disposé sous les moyens support (5).

7. Dispositif selon l'une des revendications 1 à 6, **caractérisé en ce que** les moyens d'analyse spectrale comprennent une pluralité d'émetteurs (6) disposés le long des moyens support (5) et une pluralité de récepteurs (7) associés disposés de sorte à recevoir les ondes émises par la pluralité d'émetteur (6).

8. Dispositif selon l'une des revendications 3 à 6, **caractérisé en ce que** les émetteurs (6) sont disposés dans le plan médian des moyens de support, (5) lesdits émetteurs (6) étant alternativement disposés sur et sous les moyens de support (5), et étant associés à des récepteurs (7) disposés au droit desdits émetteurs (6).

## Patentansprüche

1. Analysevorrichtung der Zusammensetzung des Inhaltes eines Behälters, umfassend:
- Sender-/Empfängermittel (40) eines elektromagnetischen Feldes in wenigstens mehreren, in einem bestimmten Frequenzbereich inbegriffenen Frequenzen;
- Stützmittel (5) eines Behälters (R), dessen Inhalt analysiert werden soll, die zum Gewährleisten einer relativen präzisen Positionierung zwischen den Sender-/Empfängermitteln (40) und dem Behälter (R) geeignet sind,
- Mittel (50), die geeignet sind, die komplexe Impedanz der Sender-/Empfängermittel zu messen, die von der Last beeinflusst sind, die von dem Empfänger (R) und seinem Inhalt gebildet ist, die die komplexen dielektrischen Merkmale des Behälters und seines Inhaltes darstellt,
**dadurch gekennzeichnet, dass** sie darüber hinaus Mittel zur Spektralanalyse des Inhaltes des Behälters zum Messen der Wellenabsorption durch den Behälter und seinen Inhalt und Mittel (50) umfasst, die geeignet sind, eine Information über die Art des Inhaltes des genannten Empfängers (R) in Abhängigkeit von der gemessenen komplexen Impedanz und der Absorptionsmessung zu liefern, die Mittel zur Spektralanalyse sind geeignet, Wellen auszugeben, deren Wellenlängen zwischen 1100 nm und 3 µm inbegriffen sind.

2. Vorrichtung gemäß Anspruch 1, **dadurch gekennzeichnet, dass** die Stützmittel eine Ausnehmung (5) umfassen, die in einem Kanal inbegriffen sind, deren Mantellinien nach unten in Beabstandung einer offenen vorderen Seite (12) geformt sind, durch die ein Behälter eingeführt ist.

3. Vorrichtung gemäß Anspruch 1, **dadurch gekennzeichnet, dass** die Mittel zur Spektralanalyse geeignet sind, Wellen auszugeben, deren Wellenlängen zwischen 1100 nm und 1300 µm inbegriffen sind.

4. Vorrichtung gemäß einem der Ansprüche 1 bis 3, **dadurch gekennzeichnet, dass** die Mittel zur Spektralanalyse wenigstens einen Sender (6) umfassen, der geeignet ist, Wellen auszugeben, und einen Empfänger (7), der derart angeordnet ist, dass er die vom Sender (6) ausgegebenen Wellen empfängt.

5. Vorrichtung gemäß Anspruch 4, **dadurch gekennzeichnet, dass** der Sender (6) und der Empfänger (7) in der medianen Ebene der einander gegenüberliegenden Stützmittel (5) derart angeordnet sind, dass die vom Sender (6) ausgegebenen Wellen den Empfänger (R) durchqueren, der vom Empfänger (7) zu analysieren ist, bevor er aufgenommen wird.

6. Vorrichtung gemäß Anspruch 5, **dadurch gekennzeichnet, dass** der Sender (6) auf den Stützmitteln (5) angeordnet ist und der Empfänger (7) unter den Stützmitteln (5) angeordnet ist.

7. Vorrichtung gemäß einem der Ansprüche 1 bis 6, **dadurch gekennzeichnet, dass** die Mittel zur Spektralanalyse eine Vielzahl von Sendern (6) umfassen, die entlang der Stützmittel (5) angeordnet sind, und eine Vielzahl von dazugehörigen Empfängern (7), die derart angeordnet sind, dass sie die von der Vielzahl von Sendern (6) ausgegebenen Wellen empfangen.

8. Vorrichtung gemäß einem der Ansprüche 3 bis 6, **dadurch gekennzeichnet, dass** die Sender (6) in der medianen Ebene der Stützmittel (5) angeordnet sind, wobei die genannten Sender (6) alternativ auf und unter den Stützmitteln (5) angeordnet sind und Empfängern (7) zugeordnet sind, die gegenüber den genannten Sendern (6) angeordnet sind.

## Claims

1. Device for analysing the composition of the contents of a container comprising:
- means (40) for emitting/receiving an electromagnetic field at at least several frequencies included within a determined frequency range,
- means for supporting (5) a container (R) of which the contents are to be analysed, suitable for ensuring a precise relative positioning between the emitting/receiving means (40) and the container (R),
- means (50) able to measure the complex impedance of the emitting/receiving means influenced by the charge formed by the container (R) and its contents, representative of the complex dielectric characteristics of the container and of its contents,
**characterised in that** it further comprises means for spectrally analysing the contents of the container in order to measure the absorption of waves by the container and its contents, and means (50) able to provide information relative to the nature of the contents of said container (R) according to the complex impedance measured and the absorption measurement, the means of spectral analysis are able to emit waves of which the wavelengths are between 1100 nm and 31 µm.

2. Device according to claim 1, **characterised in that** the support means include a cavity (5) formed from a channel of which the generatrices are inclined downwards by moving away from an open front face (12) through which a container is introduced.

3. Device according to claim 1, **characterised in that** the means of spectral analysis are able to emit waves of which the wavelengths are between 1100 nm and 1300 nm.

4. Device according to one of claims 1 to 3, **characterised in that** the means of spectral analysis include at least one emitter (6) able to emit waves and a receiver (7) arranged so as to receive the waves emitted by the emitter (6).

5. Device according to claim 4, **characterised in that** the emitter (6) and the receiver (7) are arranged in the median plane of the support means (5) in line with one another, in such a way that the waves emitted by the emitter (6) pass through the container (R) to be analysed before being received by the receiver (7).

6. Device according to claim 5, **characterised in that** the emitter (6) is arranged on the support means (5) and the receiver (7) is arranged under the support means (5).

7. Device according to one of claims 1 to 6, **characterised in that** the means of spectral analysis include a plurality of emitters (6) arranged along support means (5) and a plurality of associated receivers (7) arranged so as to receive the waves emitted by the plurality of emitters (6).

8. Device according to one of claims 3 to 6, **characterised in that** the emitters (6) are arranged in the median plane of the support means (5), said emitters (6) being alternatively arranged on and under the support means (5), and being associated with receivers (7) arranged in line with said emitters (6).
